# EUROPEAN PATENT APPLICATION

(11) **EP 1 857 937 A1**
(43) Date of publication of application: **21.11.2007**
(21) Application number: 06712470.1
(22) Date of filing: 27.01.2006
(51) Int. Cl.: G06F 11/18

(54) **INFORMATION PROCESSING APPARATUS AND INFORMATION PROCESSING METHOD**

(30) Priority: 31.01.2005 JP 2005022403
(71) Applicant: Yokogawa Electric Corporation, Tokyo 180-8750 (JP)
(72) Inventor: TERAYAMA, Atsushi, 2-chome, Musashino-shi, Tokyo, 1808750 (JP); MANIWA, Yukio, 2-chome, Musashino-shi, Tokyo, 1808750 (JP)
(74) Representative: Grünecker, Kinkeldey, Stockmair & Schwanhäusser Anwaltssozietät
(86) International application number: PCT/JP2006/301304
(87) International publication number: WO 2006/080432

(57) **Abstract**

An information processing apparatus comprises a first device and a second device of which each executes the same processing independently, a status acquiring part which acquires a status of the first device, and an event generating part which generates a common event according to the acquired status in the first device and the second device.

## Description

### FIELD OF THE INVENTION

The present invention relates to an information processing apparatus comprising plural devices for executing the same processing mutually independently and an information processing method using plural devices for executing the same processing mutually independently, and particularly to an information processing apparatus having high reliability and an information processing method.

### BACKGROUND ART

In order to improve reliability of information processing, there are cases where CPUs are duplexed and each of the CPUs is made to execute the same processing. In this case, the same information targeted for processing in each of the CPUs is given to each of the CPUs.
JP-A-8-221290 is seen as a related art.

### DISCLOSURE OF THE INVENTION

### PROBLEMS TO BE RESOLVED BY THE INVENTION

However, a circuit configuration for inputting the same information to the respective CPUs is required in order to give the same information to each of the CPUs, but it may be difficult to mount the configuration. Particularly, when two CPUs are mounted in a mutually insulated state, it is necessary to transfer information inputted to one CPU through an insulating part such as a photo coupler, and implementation may be difficult for reasons of mounting or cost.

Also, when operation timing of a CPU does not match or a malfunction in a CPU occurs, it is necessary to properly detect its abnormality.

An object of the invention is to provide an information processing apparatus having high reliability, and an information processing method.

### MEANS OF SOLVING THE PROBLEMS

The invention provides an information processing apparatus comprising: a first device and a second device of which each executes the same processing independently; a status acquiring part which acquires a status of the first device; and an event generating part which generates a common event according to the acquired status in the first device and the second device.
In this information processing apparatus, a common event according to the acquired status is generated in the first device and the second device, so that processing in the first device can be matched with processing in the second device. A "status" is not limited and, for example, a status indicated by diagnostic information acquired by the first device or information as to whether or not data generated by the first device and the second device match is also included in the "status". A "common event according to the status" is not limited, and processing at the time of abnormality, processing at the time of normality, acceptance/prohibition of data output, etc. are also included in the event.

The invention also provides an information processing apparatus comprising: a first device and a second device of which each executes the same processing independently; a first status acquiring part which acquires a status of the first device; a second status acquiring part which acquires a status of the second device; a status comparing part which compares a first status acquired by the first status acquiring part with a second status acquired by the second status acquiring part; a status selecting part which selects either the first status or the second status when both the compared statuses are different; and an event generating part which generates a common event according to the selected status in the first device and the second device.
In this information processing apparatus, a common event according to the acquired status is generated in the first device and the second device, so that processing in the first device can be matched with processing in the second device. A "status" is not limited and, for example, diagnostic information acquired by the first device or information as to whether or not data generated by the first device and the second device match is also included in the "status". A method for "selecting any one of the acquired statuses" is not limited and, for example, an abnormal status indicated by diagnostic information or a status indicated by the fact that data generated by the first device and the second device do not match (a status indicating abnormality) can be selected. A "common event according to the status" is not limited, and processing at the time of abnormality, processing at the time of normality, acceptance/prohibition of data output, etc. are also included in the event.

The information processing apparatus may comprises a status sending part which sends the first status from the first device to the second device, and the status comparing part may be disposed in the second device, and the status comparing part may compare a status sent from the status sending part with the second status.
Here, the status sending part may use asynchronous communication.

The information processing apparatus may comprise an abnormality determining part which compares states of the first device and the second device after the event is generated and determines as abnormal when both the compared states are different.
Here, in "states of the first device and the second device after the event is generated", for example, comparison may be made based on data generated by the first device and the second device and when a mismatch between both the data occurs, it may be decided that it is abnormal.

The information processing apparatus may comprise a synchronizing part which synchronizes an operation of the first device and an operation of the second device.
In this case, an operation of the first device and an operation of the second device are synchronized, so that correct processing can be executed. For example, a situation in which a "status" is not acquired correctly based on a lag in operation timing can be avoided.

In the information processing apparatus, the status may be a diagnostic information of a mounted circuit.

The information processing apparatus may comprise a collating part which collates the data generated by the first device with the data generated by the second device, and the status may be a result of the collation by the collating part.
In this case, abnormality of the case where essentially the same data should be generated can be detected as the "status".

In the information processing apparatus, the first device and the second device may be separate CPUs.

The invention also provides an information processing method which uses a first device and a second device of which each executes the same processing independently, comprising: a step of acquiring a status of the first device; and a step of generating a common event according to the acquired status in the first device and the second device.
In this information processing method, a common event according to the acquired status is generated in the first device and the second device, so that processing in the first device can be matched with processing in the second device. A "status" is not limited and, for example, a status indicated by diagnostic information acquired by the first device or information as to whether or not data generated by the first device and the second device match is also included in the "status". A "common event according to the status" is not limited, and processing at the time of abnormality, processing at the time of normality, acceptance/prohibition of data output, etc. are also included in the event.

The invention also provides an information processing method which uses a first device and a second device of which each executes the same processing independently, comprising: a first status acquiring step of acquiring a status of the first device; a second status acquiring step of acquiring a status of the second device; a step of comparing a first status acquired by the first status acquiring step with a second status acquired by the second status acquiring step; a step of selecting either the first status or the second status when both the compared statuses are different; and a step of generating a common event according to the selected status in the first device and the second device.
In this information processing method, a common event according to the acquired status is generated in the first device and the second device, so that processing in the first device can be matched with processing in the second device. A "status" is not limited and, for example, diagnostic information acquired by the first device or information as to whether or not data generated by the first device and the second device match is also included in the "status". A method for "selecting any one of the acquired statuses" is not limited and, for example, an abnormal status indicated by diagnostic information or a status indicated by the fact that data generated by the first device and the second device do not match (a status indicating abnormality) can be selected. A "common event according to the status" is not limited, and processing at the time of abnormality, processing at the time of normality, acceptance/prohibition of data output, etc. are also included in the event.

The information processing method may comprise a step of sending the first status from the first device to the second device, and the sent status may be compared with the second status in the step of comparing statuses.
Here, the first status may be sent using asynchronous communication.

The information processing method may comprise a step of comparing states of the first device and the second device after the event is generated and determining as abnormal when both the compared states are different.
Here, in "states of the first device and the second device after the event is generated", for example, comparison may be made based on data generated by the first device and the second device and when a mismatch between both the data occurs, it may be decided that it is abnormal.

The information processing method may comprise a step of synchronizing an operation of the first device and an operation of the second device.
In this case, an operation of the first device and an operation of the second device are synchronized, so that correct processing can be executed. For example, a situation in which a "status" is not acquired correctly based on a lag in operation timing can be avoided.

In the information processing method, the status may be a diagnostic information of a mounted circuit.

The information processing method may comprise a step of collating a data generated by the first device with a data generated by the second device, and the status may be a result of collation by the collating step.
In this case, abnormality of the case where essentially the same data should be generated can be detected as the "status".

The invention also provides an information processing apparatus comprising: a first device and a second device which are mounted in a insulated state and of which each executes the same processing independently; an acquiring part which is disposed in the first device and acquires a diagnostic information of a mounted part mounted in a non-insulated state with respect to the first device; a sending part which sends the acquired diagnostic information from the first device to the second device; and a process executing part which is disposed in the second device and executes a processing based on the diagnostic information sent from the sending part.
According to this information processing apparatus, the first device acquires diagnostic information about a mounted part mounted in a non-insulated state with respect to the first device, so that detailed diagnostic information about the mounted part can be acquired easily. Also, the acquired diagnostic information is sent by a sending part, so that the second device can effectively use the diagnostic information.

In the information processing apparatus, the sending part may send the acquired diagnostic information by use of an asynchronous communication.
In this case, the diagnostic information is sent using asynchronous communication, so that the diagnostic information can be sent easily while maintaining an insulated state between the first device and the second device.

In the information processing apparatus, the first device may be mounted in any one of the side of a controller and the side of a field device in a plant control system, and the second device may be mounted in the other of the side of the controller and the side of the field device.
In this case, detailed diagnostic information mounted in one of the side of the controller and the side of the field device can be acquired easily and the diagnostic information can be used effectively in the other.

In the information processing apparatus, the first device and the second device are separate CPUs.

### ADVANTAGEOUS EFFECTS OF THE INVENTION

According to the information processing apparatus and the information processing method, a common event according to the acquired status is generated in the first device and the second device, so that processing in the first device can be matched with processing in the second device.

### BRIEF DESCRIPTION OF THE DRAWINGS

[Fig. 1] is a block diagram functionally showing an information processing apparatus according to the invention.
[Fig. 2] is a block diagram functionally showing an information processing apparatus according to the invention.
[Fig. 3] is a block diagram functionally showing an information processing apparatus according to the invention.
[Fig. 4] is a block diagram showing a configuration of a safety system to which an information processing apparatus of a first embodiment is applied.
[Fig. 5] is a block diagram showing a part of the configuration of the information processing apparatus of the first embodiment.
[Fig. 6] (a) is a flowchart showing a procedure of equalization processing of statuses and (b) is a flowchart showing a procedure of comparison processing of frames.
[Fig. 7] is a diagram showing a situation of state transition of both the CPUs.
[Fig. 8] is a diagram showing sequence of communication processing.
[Fig. 9] (a) and (b) are diagrams showing configurations of communication frames and (a) shows a configuration of individual communication frames and (b) shows an operation of the case where a communication state is normal.
[Fig. 10] is a block diagram showing a configuration of an information processing apparatus of a second embodiment.
[Fig. 11] is a block diagram showing a configuration of an information processing apparatus of a third embodiment.
[Fig. 12] is a block diagram showing a part of a configuration of an information processing apparatus of a fourth embodiment.

### DESCRIPTION OF THE REFERENCE NUMERALS AND SIGNS

- 101: Status Acquiring Part
- 102: Event Generating Part
- 103: First Status Acquiring Part
- 104: Second Status Acquiring Part
- 105: Status Comparing Part
- 106: Status Selecting Part
- 107: Status Sending Part
- 111: Abnormality Determining Part
- 112: Synchronizing Part
- 113: Collating Part
- 121: Acquiring Part
- 122: Sending Part
- 123: Process Executing Part

### BEST MODE FOR CARRYING OUT THE INVENTION

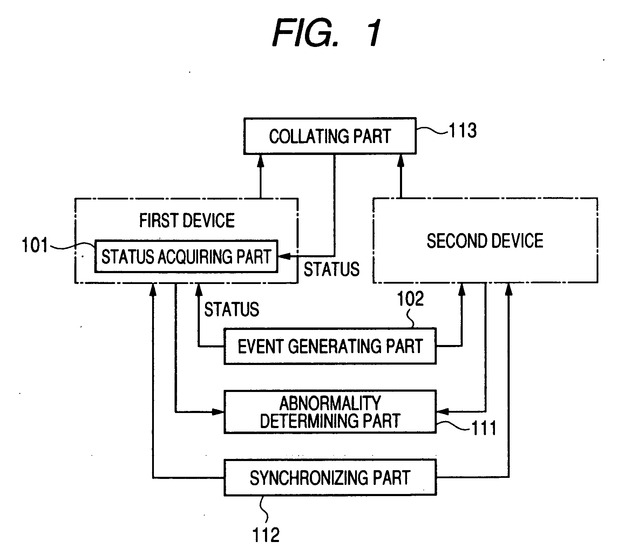

Fig. 1 to Fig. 3 are block diagrams functionally showing an information processing apparatus according to the invention.

In Fig. 1, a status acquiring part 101 acquires a status of a first device. An event generating part 102 generates a common event according to the acquired status in the first device and a second device.

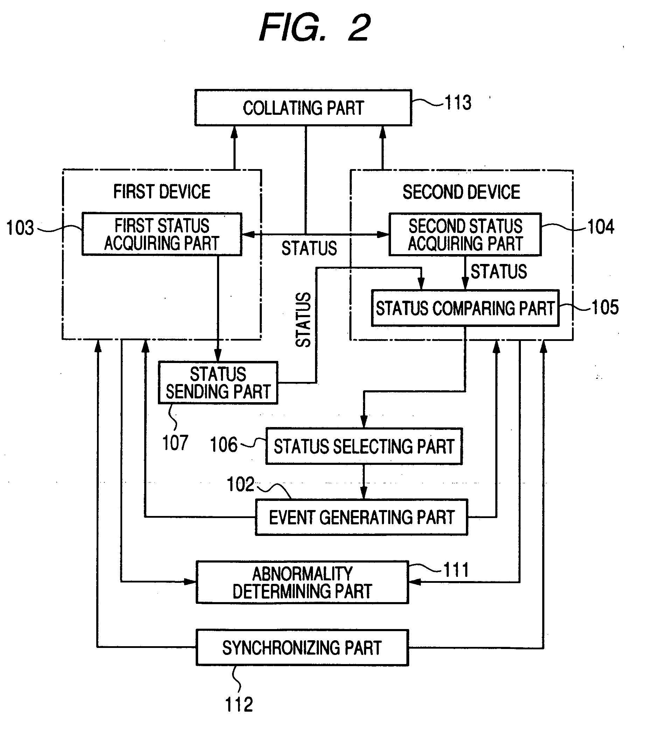

In Fig. 2, a first status acquiring part 103 acquires a status of the first device. A second status acquiring part 104 acquires a status of the second device. A status comparing part 105 compares a first status acquired by the first status acquiring part 103 with a second status acquired by the second status acquiring part 104. A status selecting part 106 selects any one of the first status and the second status when both the compared statuses differ. The event generating part 102 generates a common event according to the selected status in the first device and the second device.

In Fig. 2, a status sending part 107 sends the first status acquired by the first status acquiring part 103 from the first device to the second device. The status comparing part 105 is disposed in the second device, and compares a status sent from the status sending part 107 with the second status acquired by the second status acquiring part 104.

In Fig. 1 and Fig. 2, an abnormality determining part 111 compares states of the first device and the second device after an event is generated, and determines that it is abnormal when both the compared states differ.

In Fig. 1 and Fig. 2, a synchronizing part 112 synchronizes an operation of the first device and an operation of the second device.

In Fig. 1 and Fig. 2, a collating part 113 collates data generated by the first device with data generated by the second device. The status acquiring parts 101, 103, 104 acquire a result of collation by the collating part 113.

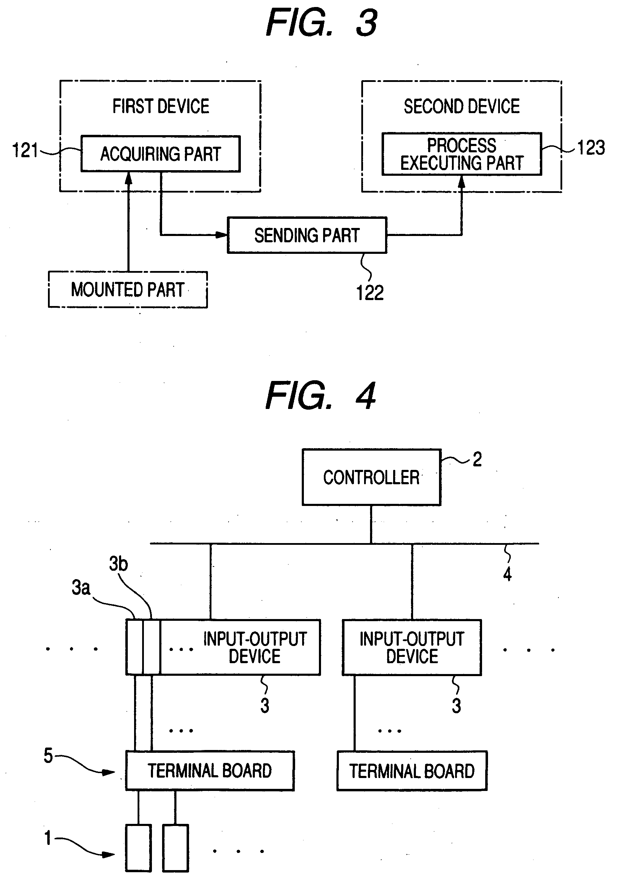

Also, in Fig. 3, the first device and the second device are mounted in a mutually insulated state.

An acquiring part 121 is disposed in the first device and acquires diagnostic information about a mounted part mounted in a non-insulated state with respect to the first device. A sending part 122 sends the diagnostic information acquired by the acquiring part 121 from the first device to the second device. A process executing part 123 is disposed in the second device and executes processing based on the diagnostic information sent from the sending part 122.

First to fourth embodiments of the information processing apparatus according to the invention will be described below with reference to Fig. 4 to Fig. 12.

### First Embodiment

Fig. 4 is a block diagram showing a configuration of a safety system to which the information processing apparatus of the first embodiment is applied. This safety system is configured as a part of a plant control system.

As shown in Fig. 4, the plant control system comprises a controller 2 for integrally managing and controlling field devices 1, 1,... such as a sensor or an electromagnetic valve arranged in each part of a plant, and input-output devices 3, 3,... interposed between the controller 2 and the field devices 1. The input-output devices 3, 3,... are connected to the controller 2 through a network 4. Also, the field devices 1, 1,... are connected to the input-output devices 3 through terminal boards 5.

As shown in Fig. 4, input-output units 3a, 3b,... for executing interface processing between the field devices 1 and the controller 1 are mounted in the input-output devices 3. As described below, in these input-output units 3a, 3b,..., the same processing is executed mutually independently for the purpose of improving reliability.

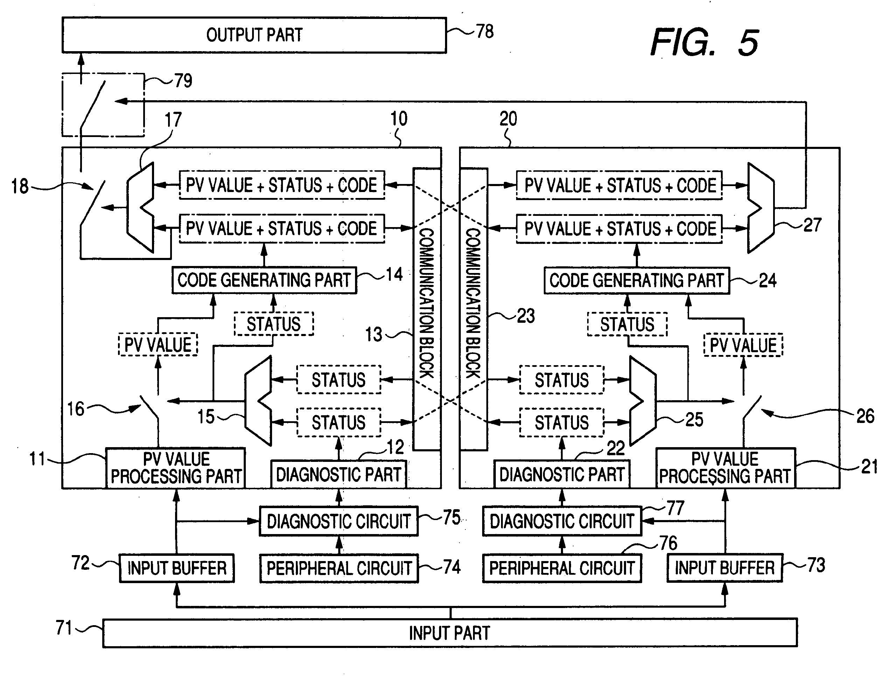

Fig. 5 is a block diagrams showing a part of the configuration of the input-output unit 3a. In Fig. 5, an example of a unit for processing an input value inputted from the side of the field device 1 which is a downstream process and outputting a PV value (process value) to the side of the controller 2 which is an upstream process is shown.

As shown in Fig. 5, this unit comprises a master CPU 10 and a slave CPU 20, and the respective CPU 10 and CPU 20 execute the same processing mutually independently. Also, the CPU 10 and the CPU 20 execute diagnosis of mounted parts (peripheral circuits) mounted in the respective peripheries.

As shown in Fig. 5, an input value from the field device 1 is inputted to the master CPU 10 through an input part 71 and an input buffer 72. A peripheral circuit 74 of the periphery of the master CPU 10 is diagnosed by a diagnostic circuit 75. Also, a signal outputted from the input buffer 72 is inputted to the diagnostic circuit 75 and the presence or absence of abnormality of the signal is diagnosed. The presence or absence of abnormality of the peripheral circuit 74 and the presence or absence of abnormality of the signal outputted from the input buffer 72 are inputted to the master CPU 10 as diagnostic information from the diagnostic circuit 75.

Similarly, the same input value from the field device 1 is inputted to the slave CPU 20 through the input part 71 and an input buffer 73. A peripheral circuit 76 of the periphery of the slave CPU 20 is diagnosed by a diagnostic circuit 77. Also, a signal outputted from the input buffer 73 is inputted to the diagnostic circuit 77 and the presence or absence of abnormality of the signal is diagnosed. The presence or absence of abnormality of the peripheral circuit 76 and the presence or absence of abnormality of the signal outputted from the input buffer 73 are inputted to the slave CPU 20 as diagnostic information from the diagnostic circuit 77.

As shown in Fig. 5, the master CPU 10 comprises a PV value processing part 11 for executing arithmetic processing with respect to an input value inputted via the input buffer 72 and making conversion into a PV value (process value) of a format capable of processing in an upstream process which is the side of the controller 2, and a diagnostic part 12 for receiving diagnostic information from the diagnostic circuit 75 and executing abnormal detection and determining and generating a status which is a diagnostic result.

Also, the master CPU 10 comprises a communication block 13 for conducting an asynchronous communication (UART) as a serial communication with the slave CPU 20, and a code generating part 14 for adding a CRC (Cyclic Redundancy Check) code and an update counter to a PV value and a status.

Also, the slave CPU 20 comprises a PV value processing part 21 for executing arithmetic processing with respect to an input value inputted via the input buffer 73 and making conversion into a PV value (process value) of a format capable of processing in the upstream process which is the side of the controller 2, and a diagnostic part 22 for receiving diagnostic information from the diagnostic circuit 77 and executing abnormal detection and determining and generating a status which is a diagnostic result.

Also, the slave CPU 20 comprises a communication block 23 for executing synchronous communication (UART) as a serial communication with the master CPU 10, and a code generating part 24 for adding a CRC (Cyclic Redundancy Check) code and an update counter to a PV value and a status.

Next, an operation of the present unit will be described.

In the master CPU 10, a status generated by the diagnostic part 12 and a status which is generated by the diagnostic part 24 of the slave CPU 20 and is acquired through communication by the communication block 23 and the communication block 13 are compared and equalized in an equalization part 15. Equalization is processing for equalizing a status handled by the master CPU 10 and a status handled by the slave CPU 20. In the equalization part 15, OR information about the statuses is generated. That is, when either status indicates abnormality in the equalization part 15, its abnormality is changed to the captured status and is passed to the code generating part 14. As described below, the statuses handled by the master CPU 10 and the slave CPU 20 are shared by performing similar processing also in the slave CPU 20.

A PV value generated by the PV value processing part 11 is given to the code generating part 14. However, when abnormality of a status is detected based on processing in the equalization part 15, an input of the PV value to the code generating part 14 is broken by a breaking part 16.

In the code generating part 14, a CRC code is generated based on the status generated by the equalization part 15 and the inputted PV value. Also, every time new PV value and status are inputted, a count number is updated and a code added to a CRC code is generated. In the code generating part 14, a frame made of the PV value, the status, the CRC code and the count number is generated by adding the code generated thus to the PV value and the status. The count number is incremented every update of the PV value and the status.

A frame similar to the frame created by the code generating part 14 is similarly generated by the code generating part 24 of the slave CPU 20 and is acquired through communication by the communication block 23 and the communication block 13. The frame created by the code generating part 14 and the frame created by the code generating part 24 are collated in a comparing part 17. The comparing part 17 decides that it is abnormal when a mismatch between both the frames is detected. As described below, by performing similar processing also in the slave CPU 20, the master CPU 10 and the slave CPU 20 mutually collate the other processing result with my processing result and decide that it is abnormal when a mismatch occurs. When all the processing in the master CPU 10 and the slave CPU 20 is normal, both the frames match as a result of collation in the comparing part 17.

The frame generated by the code generating part 14 is outputted to an output part 78 which is an upstream process. However, a mismatch between both the frames is detected in the comparing part 17 and in the case of deciding that it is abnormal, an output of the frame is broken by a breaking part 18. Also, as described below, when a mismatch between the frames is detected in a comparing part 27 of the slave CPU 20, an output of the frame is broken in a fail-safe part 79.

On the other hand, in the slave CPU 20, a status generated by the diagnostic part 22 and a status which is generated by the diagnostic part 14 of the master CPU 10 and is acquired through communication by the communication block 13 and the communication block 23 are compared and equalized in an equalization part 25. In the equalization part 25, OR information about the statuses is generated. That is, when either status indicates abnormality in the equalization part 25, its abnormality is changed to the captured status and is passed to the code generating part 24.

A PV value generated by the PV value processing part 21 is given to the code generating part 24. However, when abnormality of a status is detected based on processing in the equalization part 25, an input of the PV value to the code generating part 24 is broken by a breaking part 26.

In the code generating part 24, a CRC code is generated based on the status generated by the equalization part 25 and the inputted PV value. Also, every time new PV value and status are inputted, a count number is updated and a code added to a CRC code is generated. In the code generating part 24, a frame made of the PV value, the status, the CRC code and the count number is generated by adding the code generated thus to the PV value and the status. The count number is incremented every update of the PV value and the status.

The frame created by the code generating part 24 is collated with a frame which is similarly generated by the code generating part 14 of the master CPU 10 and is acquired through communication by the communication block 13 and the communication block 23 in a comparing part 27. It is decided that it is abnormal when a mismatch between both the frames is detected in the comparing part 27.

When the mismatch between the frames is detected in the comparing part 27, a fail-safe signal indicating abnormality is outputted from the comparing part 27 and is given to the fail-safe part 79. In this case, in the fail-safe part 79, an output of a frame from the CPU 10 is broken and a new frame to the output part 78 is inhibited. Instead of breaking an output by the fail-safe part 79, a reset signal may be outputted from the CPU 20 to a reset circuit of the CPU 10. In this case, the CPU 10 receiving the reset signal is forcedly reset and an output to the output part 78 is inhibited.

When the output to the output part 78 is inhibited, update of the count number is stopped, so that it can be recognized that an output of information is stopped by only referring to the count number in an upstream process of a subsequent stage after the output part 78.

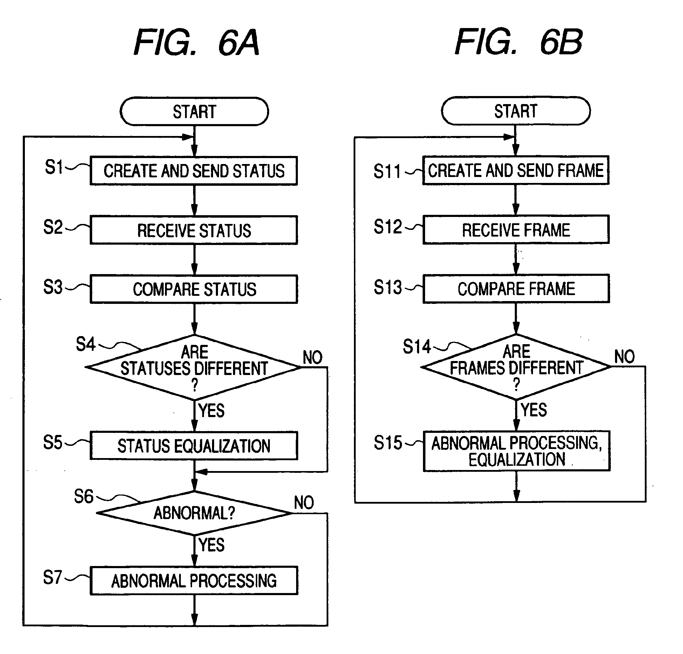

Fig. 6(a) is a flowchart showing a procedure of equalization processing of the statuses described above, and Fig. 6(b) is a flowchart showing a procedure of comparison processing of frames. The processing is respectively executed in a master CPU 10 and a slave CPU 20.

Step S1 to step S7 show a procedure of equalization processing of statuses.

In step S 1 of Fig. 6(a), a status is generated by the diagnostic part 12 or the diagnostic part 22 and the generated status is sent through the communication block 13 or the communication block 23.

In step S2, the status sent from the other CPU is received through the communication block 13 or the communication block 23.

In step S3, the status generated by my CPU is compared with the status generated by the other CPU in the equalization part 15 or the equalization part 25. In the case of deciding that the compared statuses are not equal in step S4, the statuses are equalized in step S5. In the case of deciding that the compared statuses are equal in step S4, step S5 is skipped.

As described above, in step S5, OR information about the statuses is generated in equalization processing of the statuses and thereby, abnormality of either status is represented in a status after equalization and a status of the safe side in which the abnormality is always reflected on an operation of the CPU is created. Also, an algorithm of equalization of the statuses is the same between the master CPU 10 and the slave CPU 20, and the status after equalization obtained in the case of correctly executing processing of equalization is always shared between both the CPUs.

It is decided whether or not the status after equalization indicates abnormality in step S6, and when the decision is affirmed, an input of a PV value to the code generating part 14 or the code generating part 24 is broken by the breaking part 16 or the breaking part 26 in step S7. After processing of step S7 is ended, the flow returns to step S1.

When the decision of step S6 is denied, step S7 is skipped and the flow returns to step S1. The procedure of step S1 to step S7 is repeated below in a processing phase unit.

In the embodiment thus, equalization processing of the statuses is executed in the processing phase unit and the same status is recognized in both the CPUs and the same processing is executed. That is, the same event is executed.

Step S11 to step S15 of Fig. 6(b) show a procedure of comparison processing of frames.

In step S11 of Fig. 6(b), a frame made of a PV value, a status, a CRC code and a count number is generated by the code generating part 14 or the code generating part 24 and the generated status is sent through the communication block 13 or the communication block 23.

In step S12, the frame sent from the other CPU is received through the communication block 13 or the communication block 23.

In step S13, the frame generated by my CPU is compared with the frame generated by the other CPU in the comparing part 17 or the comparing part 27. In the case of deciding that the compared frames are not equal in step S14, an output of the frame is broken in the breaking part 18 or the fail-safe part 79 in step S15. After processing of step S14 is ended, the flow returns to step S11.

When the decision of step S14 is denied, step S15 is skipped and the flow returns to step S11. The procedure of step S11 to step S15 is repeated below in a processing phase unit.

In the embodiment thus, the frames are compared in the processing phase unit and when both the frames differ, it is decided that it is abnormal, and predetermined processing is executed. In the embodiment, when both the frames differ, the same processing for recognizing abnormality in common, that is, selecting a common status and stopping an output of the frame to the output part 78, that is, the same event is executed in both the CPUs.

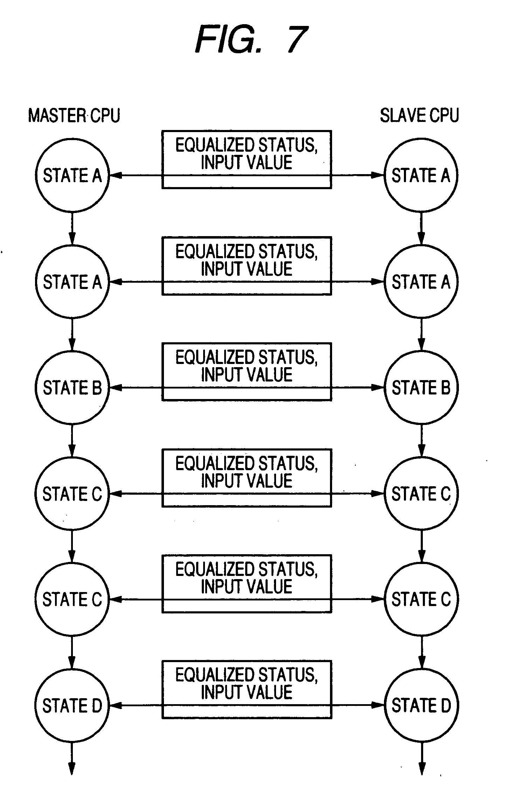

Fig. 7 is a diagram showing a situation of state transition of both the CPUs by processing shown in Figs. 6(a) and 6(b).

As shown in Fig. 7, by equalization of statuses, the same status is recognized by both the CPUs. Also, the same input value is given to both the CPUs. Therefore, in both the CPUs, a common event is always executed from the same state and states after execution of the event also become equal.

Next, a method of communication between the master CPU 10 and the slave CPU 20 will be described. As described above, in the master CPU 10 and the slave CPU 20, data is exchanged in real time and the data is collated. As a result of this, when timing of processing in both the CPUs is off, separate processing results different in a time axis direction are compared and a mismatch of collation occurs. As a result of this, it is necessary for both the CPUs to always execute the same operation in the apparatus of the present embodiment. Therefore, control is performed so that a timing phase trigger is sent from the side of the master CPU 10 using asynchronous communication (UART) and the slave CPU 20 can execute processing in the same sequence in synchronization.

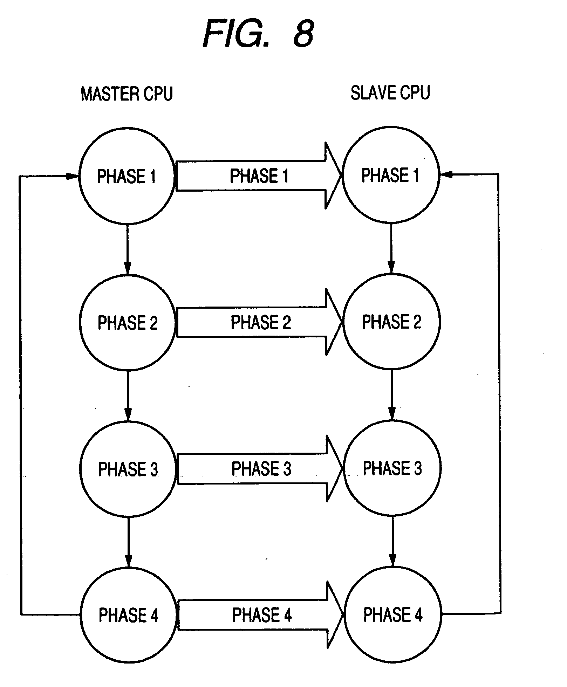

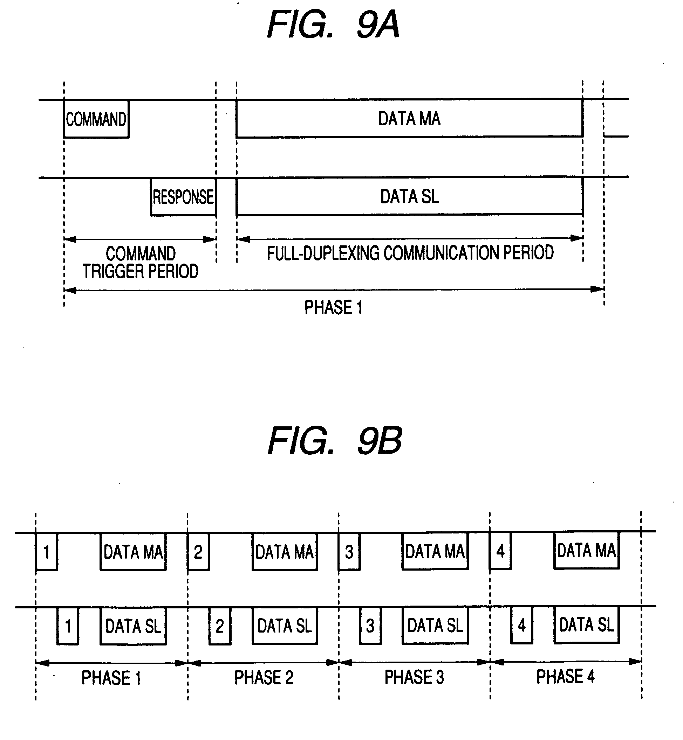

Fig. 8 is a diagram showing sequence of communication processing. Figs. 9(a) and Fig. 9(b) are diagrams showing configurations of communication frames, and Fig. 9(a) shows a configuration of individual communication frames, and Fig. 9(b) shows an operation of the case where a communication state is normal.

As shown in Fig. 8, the master CPU 10 sends a command with a timing phase trigger to the slave CPU 20 in a constant cycle. The slave CPU 20 receiving the command replies a response to the master CPU 10. After such processing, both the CPUs execute the same phase and thereby processing of both the CPUs is synchronized.

As shown in Fig. 9(a), the master CPU 10 sends a command with a timing phase trigger through the communication block 13. The slave CPU 20 receives the command through the communication block 23. In the slave CPU 20, a phase (sequence number) represented in the received command is compared with an expected phase (sequence number), that is, a phase (phase 1 in Fig. 9(a)) to be processed next and when both the phases match, it is recognized that a communication state is normal. In the case of recognizing that the communication state is normal, the slave CPU 20 replies a response including information (sequence number) indicating the phase (phase 1 in Fig. 9(a)) to the master CPU 10 through the communication block 23. The master CPU 10 recognizes that a communication state is normal when the response from the slave CPU 20 is received within a certain time and a phase (sequence number) represented in the received response is proper.

After a command trigger period for which a communication state is recognized by sending and receiving of the command and the response, it shifts to a full-duplexing communication period. For the full-duplexing communication period, the master CPU 10 and the slave CPU 20 respectively execute processing of the same phase (phase 1 in Fig. 9(a)), and data MA is sent from the master CPU 10 to the slave CPU 20 and data SL is sent from the slave CPU 20 to the master CPU 10, concurrently. The data MA and the data SL include the frame (frame made of a PV value, a status, a CRC code and a count number) sent and received for collation and the status sent and received for equalization described above, respectively.

As shown in Fig. 9(b), by sequentially repeating such phases, the same processing is executed in synchronization with each other in the master CPU 10 and the slave CPU 20.

As described above, in the first embodiment, statuses acquired by each of the CPUs are equalized at the previous stage of mutually collating data of both the CPUs. As a result of this, when abnormality of the status is detected in either CPU, both the CPUs share recognition that the status is abnormal by equalization of the statuses. Therefore, at the time of abnormality of the status, a collation mismatch between data at the subsequent stage does not occur and the status abnormality can be recognized separately from the collation mismatch between data, and notification of an abnormal state can be provided correctly. Also, in the first embodiment, the diagnostic part 12 of the master CPU 10 receives diagnostic information from the diagnostic circuit 75 and executes abnormal detection and determination and thereby, a status which is a diagnostic result is generated and this status is sent to the slave CPU 20. Similarly, the diagnostic part 22 of the slave CPU 20 receives diagnostic information from the diagnostic circuit 77 and executes abnormal detection and determination and thereby, a status which is a diagnostic result is generated and this status is sent to the master CPU 10. Thus, information targeted for communication is not the diagnostic information itself and is the status aggregated as information necessary for processing to abnormality, so that the amount of communication data can be suppressed and a load of communication is reduced. Such status equalization is particularly more effective in the case where it is necessary to loosely couple CPUs by decreasing a common circuit part between the CPUs even though an independent peripheral circuit is increased every CPU. Also, it is effective in the case where a peripheral circuit can be diagnosed in only one CPU.

In the first embodiment, CRC codes are generated by both the CPUs and collation is executed by data (frames) with CRC, so that reliability of the collation increases. Also, only when both the data match as a result of the collation by both the CPUs, information is notified of an upstream process and when any one of the CPUs determines that it is abnormal, an output of information to the upstream process is surely prevented. As a result of this, reliability of the information outputted to the upstream process can be increased. That is, the fact that a CRC code is normal by inspection in the upstream process means that its data is data with high reliability collated between the CPUs inside the input-output unit 3a. Also, in the upstream process, by inspecting the CRC code, the presence or absence of abnormality can be diagnosed again over all the processes of handling data with CRC inside the CPU.

Also, using communication between CPUs, data with CRC is sent and received and is collated by both the CPUs, so that it is unnecessary to separately make a check of frames of communication between CPUs, for example, a check of frame sum, parity, etc.

The first embodiment is constructed so as to synchronize processing every phase using timing of communication between CPUs. As a result of this, it is unnecessary to perform useless processing for synchronization and reduction in performance resulting from synchronization processing does not occur. That is, extra processing is not required by only inserting a sequence number for identifying a phase into the primarily essential contents of communication. Also, both the CPUs always execute the same phase in synchronization with each other by such synchronization, so that accuracy of data collation between the CPUs can be increased. On the other hand, both the CPUs simultaneously follow a transient state change caused by a factor of the outside of the CPU, so that a sudden collation mismatch between data does not occur. Also, the CPU 20 basically has a relation of executing a phase specified from the CPU 10, so that return can be made easily even in the case of going out of synchronization between phases.

The processing of equalization, addition of a CRC code, sequence of data collation, etc. shown in the first embodiment can be implemented easily by a program of the CPU. Also, communication between CPUs can be implemented easily using an asynchronous communication (UART) function normally mounted in the CPUs. Also, by using serial communication as the communication between CPUs, mounting is facilitated even when two CPUs are mounted in the side of a controller and the side of a field device insulated mutually.
Second Embodiment

An information processing apparatus of a second embodiment shows an example in which a master CPU and a slave CPU are mounted in a mutually insulated state.

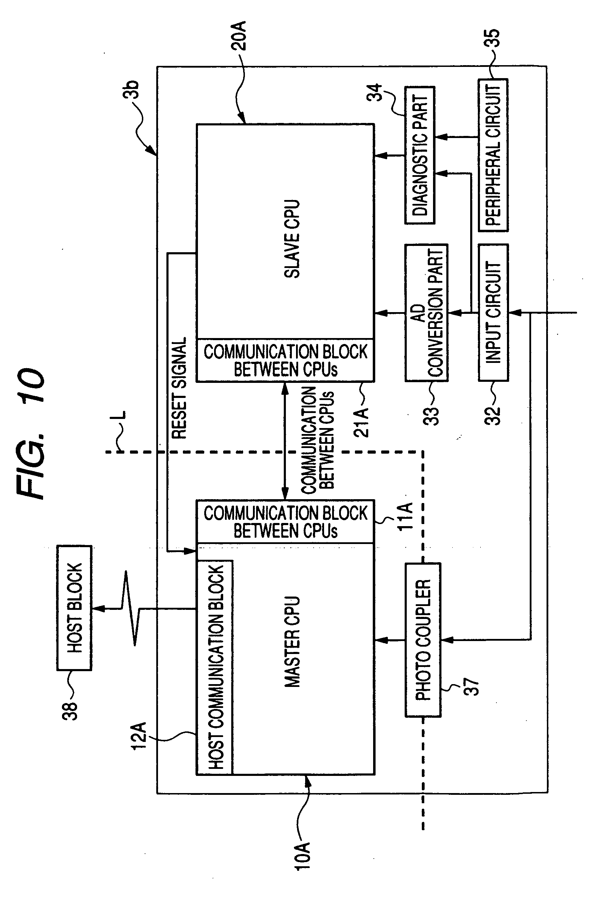

Fig. 10 is a block diagram showing a configuration of an input-output unit as the information processing apparatus of the second embodiment.

In the plant control system as shown in Fig. 4, the controller 2 and the field devices 1 are usually spaced. Therefore, grounds of the field devices 1 and the controller 2 are disposed in a mutually separated state for the purpose of escaping the influence of a thunderbolt or noise propagating the surface of earth. As a result of this, it is necessary to maintain an electrically insulated state between the side of the controller 2 and each of the field devices 1.

In an input-output unit 3b shown in Fig. 10, a master CPU 10A is disposed in the side (upstream side) of the controller 2 and a slave CPU 20A is disposed in the side (downstream side) of the field devices 1 through an insulation boundary L. An analog input value from the downstream side is converted into a digital signal in an AD conversion part 33 via an input circuit 32 and is inputted to the slave CPU 20A. Information, which shares a ground potential with the slave CPU 20A, from a peripheral circuit 35 is given to a diagnostic part 34 and also an input value outputted from the input circuit 32 is given to the diagnostic part 34. In the diagnostic part 34, diagnostic information based on the input value outputted from the input circuit 32 and the information from the peripheral circuit 35 is given to the slave CPU 20A.

On the other hand, the input value from the downstream side is also inputted to the master CPU 10A through a photo coupler 37. The analog input value is binarized in the photo coupler 37. Processing based on a binarized signal (digital signal) is executed in the master CPU 10A.

In addition, the input value is constructed of plural channels (for example, 8 channels), and units of the number corresponding to the number of channels are prepared in the input circuit 32, the AD conversion part 33 and the photo coupler 37.

The master CPU 10A and the slave CPU 20A send and receive a command with a timing phase trigger and a response to the command through a communication block 11A between CPUs and a communication block 21A between CPUs disposed respectively. Consequently, the same processing is executed in synchronization mutually independently. Also, the master CPU 10A and the slave CPU 20A send and receive mutual data through the communication block 11A between CPUs and the communication block 21 A between CPUs and respectively collate the data. Further, diagnostic information obtained in the slave CPU 20A is also sent to the master CPU 10A and statuses are equalized.

In the master CPU 10A, a host block 38 is notified of data through a host communication block 12A only when both the data match as a result of collation between the data of the master CPU 10A and the slave CPU 20A without indicating abnormality of the equalized statuses. Also, when an abnormal of a status, a mismatch between data of the master CPU 10A and the slave CPU 20A is detected in the slave CPU 20A, a reset signal is sent out to the master CPU 10A. In this case, the master CPU 10A is forcedly changed in a reset state by the reset signal and notification of data from the master CPU 10A to the host block 38 is inhibited.

Thus, in the second embodiment, statuses are equalized and when the status after equalization indicates abnormality, an output of data to the host communication block 12A is stopped in both the CPUs. That is, the same event is executed in both the CPUs. Consequently, an output of data to the host block 38 can be inhibited surely when there is the possibility of abnormality.

Also, in the second embodiment, data generated in both the CPUs are compared and when a mismatch between the data is detected, an output of data to the host communication block 12A is stopped in both the CPUs. That is, the same event is executed in both the CPUs. Consequently, an output of data to the host block 38 can be inhibited surely when there is the possibility of abnormality.

In addition, transmission lines of a reset signal and a path of communication between CPUs are insulated between the master CPU 10A and the slave CPU 20A by a photo coupler etc. in the insulation boundary L.

Also, in the unit 3b shown in Fig. 10, the slave CPU 20A is mounted in the side of the field devices 1 and the input circuit 32 or information from the peripheral circuit 35 of the side of the field devices 1 is mounted in a state non-insulated from the slave CPU 20A. As a result of this, the slave CPU 20A can easily capture an input value via the input circuit 32 or information from the peripheral circuit 35 of the side of the field devices 1 and can make a detailed diagnosis. Also, by using asynchronous communication (UART) etc., communication between CPUs can be executed by a small number of communication lines, so that an insulated state can be maintained easily. As a result of this, the statuses which are diagnostic information are equalized between both the CPUs by the communication between CPUs and thereby, a detailed diagnostic result in the slave CPU 20A can also be effectively utilized in the master CPU 10A.

### Third Embodiment

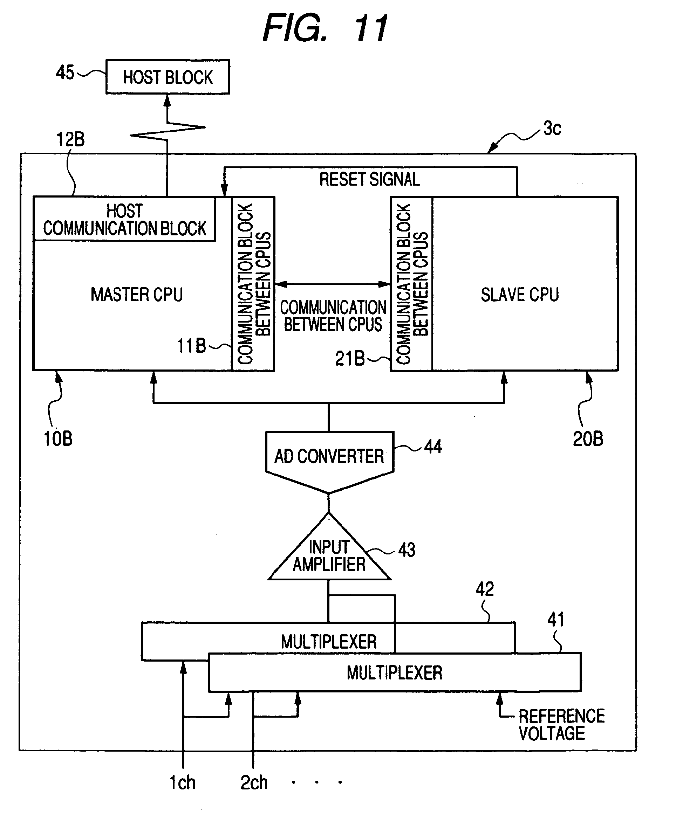

An information processing apparatus of a third embodiment shows an example of an input-output unit in which an analog signal from the side of the field devices 1 (Fig. 4) is converted into a digital signal and two CPUs receive the common digital signal and data is outputted to the side of the controller 2 (Fig. 4). Fig. 11 is a block diagram showing a configuration of the input-output unit as the information processing apparatus of the third embodiment.

An input-output unit 3c shown in Fig. 11 comprises a master CPU 10B and a slave CPU 20B for executing the same processing mutually independently, a main multiplexer 41 and a sub multiplexer 42 for receiving analog signals of plural channels (for example, 8 channels) and selecting one signal, an input amplifier 43 for receiving the analog signal from the multiplexer 41, and an AD converter 44 for converting a signal outputted from the input amplifier 43 into a digital signal and giving the signal to the master CPU 10B and the slave CPU 20B.

Output signals of the main multiplexer 41 and the sub multiplexer 42 are respectively compared in the master CPU 10B and the slave CPU 20B and in the case of a mismatch, it is decided that a status is abnormal. Also, the statuses are exchanged by communication between CPUs and the statuses are equalized. Consequently, soundness of an operation of the multiplexer 41 is diagnosed. Also, the input amplifier 43 and the AD converter 44 are common to all the channels, and the statuses are monitored by inputting a reference voltage to the input amplifier 43 through the multiplexer 41 in a constant cycle and respectively checking an output of the AD converter 44 by the master CPU 10B and the slave CPU 20B. Also in this case, the statuses are exchanged by communication between CPUs and the statuses are equalized.

The master CPU 10B and the slave CPU 20B send and receive a command with a timing phase trigger and a response to the command through a communication block 11B between CPUs and a communication block 21B between CPUs disposed respectively and thereby, the same processing is executed in synchronization mutually independently. Also, statuses obtained by the master CPU 10B and the slave CPU 20B are exchanged by communication between CPUs and the statuses are equalized.
Further, the master CPU 10B and the slave CPU 20B send and receive mutual data through the communication block 11B between CPUs and the communication block 21B between CPUs and collate the data.

In the master CPU 10B, a host block 45 is notified of data through a communication block 12B only when both the data match as a result of collation between the data of the master CPU 10B and the slave CPU 20B without indicating abnormality of the equalized statuses. Also, when an abnormality of status, a mismatch between data of the master CPU 10B and the slave CPU 20B is detected in the slave CPU 20B, a reset signal is sent out to the master CPU 10B. In this case, the master CPU 10B is forcedly changed in a reset state by the reset signal and notification of data from the master CPU 10B to the host block 45 is inhibited.

Thus, in the third embodiment, statuses are equalized and when the status after equalization indicates abnormality, an output of data to the host block 45 is prohibited in both the CPUs. That is, the same event is executed in both the CPUs. Consequently, an output of data to the host block 45 can be inhibited surely when there is the possibility of abnormality.

Also, in the third embodiment, data generated in both the CPUs are compared and when a mismatch between the data is detected, an output of data to the host block 45 is prohibited in both the CPUs. That is, the same event is executed in both the CPUs. Consequently, an output of data to the host block 45 can be inhibited surely when there is the possibility of abnormality.

### Fourth Embodiment

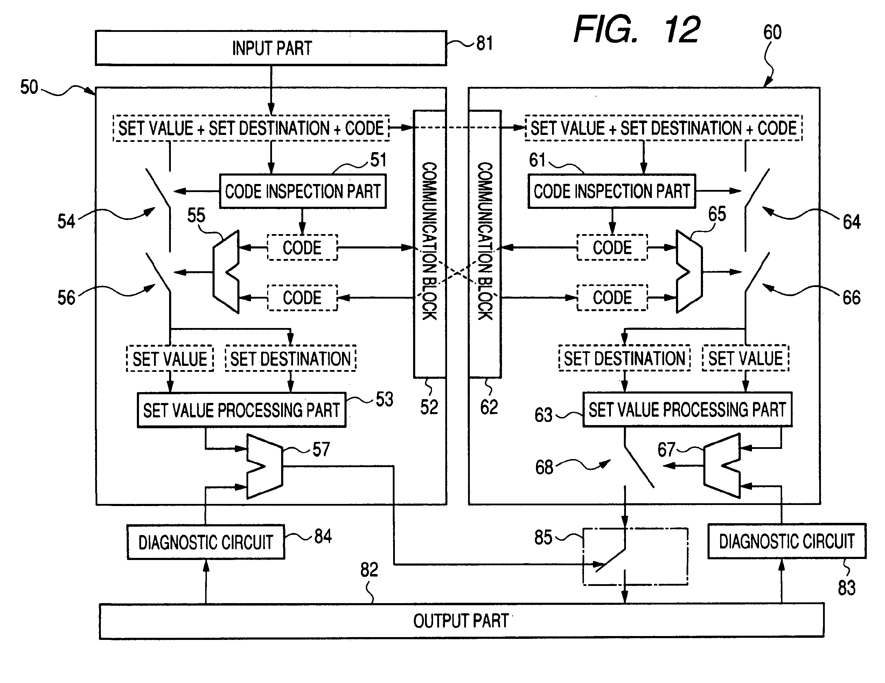

An information processing apparatus of a fourth embodiment shows an example of an input-output unit in which data with a CRC code inputted from the side (upstream side) of the controller 2 (Fig. 4) is outputted to the side (downstream side) of the field devices 1 (Fig. 4). Fig. 12 is a block diagram showing a part of a configuration of the input-output unit as the information processing apparatus of the fourth embodiment.

The input-output unit shown in Fig. 12 comprises a CPU 50 and a CPU 60 for executing processing mutually independently.

The CPU 50 comprises a code inspecting part 51 for inspecting a CRC code based on data inputted via an input part 81, a communication block 52 for executing communication with the CPU 60, and a set value processing part 53 for converting the inputted data into a format used in the side of the field devices 1.

The CPU 60 comprises a code inspecting part 61 for inspecting a CRC code based on data transferred from the CPU 50, a communication block 62 for executing communication with the CPU 60, and a set value processing part 63 for converting the inputted data into a format used in the side of the field devices 1.

Next, an operation of the input-output unit shown in Fig. 12 will be described.

Data from the side of the controller 2 is inputted to the CPU 50 through the input part 81. This data includes a set destination for identifying the field device 1 (for example, an electromagnetic valve), a set value (for example, an opening of an electromagnetic valve) to be set in the set destination, and a CRC code created based on data of the set destination and the set value.

The data inputted to the CPU 50 is given to the code inspecting part 51. In the code inspecting part 51, a CRC code is created based on data of the set destination and the set value received. Then, a CRC code received as data is compared with the CRC code created in the code inspecting part 51. The code inspecting part 51 decides that it is abnormal when a mismatch between both the CRC codes occurs, and in this case, data is broken in a breaking part 54.

On the other hand, the data inputted to the CPU 50 is sent through the communication block 52. The sent data is received by the CPU 60 through the communication block 62.

The data received by the CPU 60 is given to the code inspecting part 61. In the code inspecting part 61, a CRC code is created based on data of the set destination and the set received. Then, a CRC code received as data is compared with the CRC code created in the code inspecting part 61. The code inspecting part 61 decides that it is abnormal when a mismatch between both the CRC codes occurs, and in this case, data is broken in a breaking part 64.

Then, the CRC code created in the code inspecting part 51 of the CPU 50 is sent through the communication block 52. The sent CRC code is received by the CPU 60 through the communication block 62. Also, the CRC code created in the code inspecting part 51 of the CPU 50 is compared with the CRC code sent from the CPU 60 in a comparing part 55.

The comparing part 55 decides that it is abnormal when both the CRC codes do not match as a result of comparing both the CRCs. In this case, data is broken in a breaking part 56.

In the CPU 60, the CRC code created in the code inspecting part 61 is sent through the communication block 62. The sent CRC code is received by the CPU 50 through the communication block 52. This CRC code is compared with the CRC code created in the code inspecting part 51 in the comparing part 55 as described above.

Also, the CRC code created in the code inspecting part 61 of the CPU 60 is compared with the CRC code sent from the CPU 50 in a comparing part 65.

The comparing part 65 decides that it is abnormal when both the CRC codes do not match as a result of comparing both the CRCs. In this case, data is broken in a breaking part 66.

Then, in the CPU 50, the data received from the input part 81 is given to the set value processing part 53. However, in the case of deciding that it is abnormal as described above, delivery of data is inhibited in the breaking part 54 or the breaking part 56 and processing in the set value processing part 53 is stopped.

When data is inputted, data of a set destination and a set value are converted into a format used in the side of the field devices 1 in the set value processing part 53.

On the other hand, in the CPU 60, the data sent from the CPU 50 is given to the set value processing part 63. However, in the case of deciding that it is abnormal as described above, delivery of data is inhibited in the breaking part 64 or the breaking part 66 and processing in the set value processing part 63 is stopped.

When data is inputted, in the set value processing part 63, data of a set destination and a set value are converted into a format used in the side of the field devices 1 and the data of the set destination and the set value are outputted to an output part 82.

The data of the set destination and the set value outputted to the output part 82 are inputted to a comparing part 67 of the CPU 60 through a diagnostic circuit 83. Also, the data of the set destination and the set value outputted from the set value processing part 63 are directly inputted to the comparing part 67.

In the comparing part 67, the data of the set destination and the set value at a stage outputted from the set value processing part 63 are compared with the data of the set destination and the set value via the diagnostic circuit 83 and when a mismatch between both the data occurs, it is decided that it is abnormal. In this case, the data of the set destination and the set value are broken in a breaking part 68 and an output of the data of the set destination and the set value to the output part 82 is inhibited.

Also, the data of the set destination and the set value outputted from the CPU 60 to the output part 82 are inputted to a comparing part 57 of the CPU 50 through a diagnostic circuit 84. Further, the data of the set destination and the set value outputted from the set value processing part 53 are directly inputted to the comparing part 57.

In the comparing part 57, the data of the set destination and the set value outputted from the set value processing part 53 are compared with the data of the set destination and the set value outputted from the CPU 60 and when a mismatch between both the data occurs, it is decided that it is abnormal. In this case, the data of the set destination and the set value are broken in a fail-safe circuit 85 and an output of the data of the set destination and the set value from the CPU 60 to the output part 82 is inhibited.

Thus, in the fourth embodiment, the side of the CPU 60 executes a data output to the output part 82, but in the CPU 60, the outputted data is itself traced and in the case of deciding that it is abnormal, the data output is stopped. Also, in the CPU 50, the data outputted to the output part 82 by the CPU 60 is simultaneously traced and in the case of deciding that it is abnormal, an output by the CPU 60 from the side of the CPU 50 is inhibited. As a result of this, when either CPU decides that it is abnormal, the data output is inhibited, so that wrong data can surely be prevented from being outputted to the output part 82.

As described above, in the fourth embodiment, CRC codes generated in both the CPUs are compared and when a mismatch between the codes is detected, data is broken in both the CPUs. That is, the same event is executed in both the CPUs. Also, data outputted from the CPU 60 to the output part 82 is compared with data generated by the CPU 50 and when a mismatch between the data is detected, an output of data from the CPU 60 is broken in both the CPUs. That is, the same event is executed in both the CPUs. Consequently, an output of data to the output part 82 can be inhibited surely when there is the possibility of abnormality.

The scope of application of the invention is not limited to the embodiments described above. Also, the invention can be widely applied to an information processing system for handling various information as well as a safety system.

The present application is based on Japanese Patent Application (No.2005-022403) filed on January 31, 2005, the contents of which are incorporated herein by reference.
Fig. 1:
   a first device
   b second device
   c status
   101 status acquiring part
   102 event generating part
   111 abnormality determining part
   112 synchronizing part
   113 collating part
Fig. 2:
   a first device
   b second device
   c status
   102 event generating part
   103 first status acquiring part
   104 second status acquiring part
   105 status comparing part
   106 status selecting part
   107 status sending part
   111 abnormality determining part 112 synchronizing part
   113 collating part
Fig. 3:
   a first device
   b second device
   c mounted part
   121 acquiring part
   122 sending part
   123 process executing part
Fig. 4:
   2 controller
   3 input-output device
   5 terminal board
Fig. 5:
   a PV value + status + code
   b status
   c PV value
   11 PV value processing part
   12 diagnostic part
   13 communication block
   14 code generating part
   21 PV value processing part
   22 diagnostic part
   23 communication block
   24 code generating part
   71 input part
   72 input buffer
   73 input buffer
   74 peripheral circuit
   75 diagnostic circuit
   76 peripheral circuit
   77 diagnostic circuit
   78 output part
Fig. 6:
   a start
   S1 create and send status
   S2 receive status
   S3 compare status
   S4 Are statuses different?
   S5 status equalization
   S6 Abnormal?
   S7 abnormal processing
   S11 create and send frame
   S12 receive frame
   S13 compare frame
   S14 Are frames different?
   S15 abnormal processing, equalization
Fig. 7:
   a master CPU
   b slave CPU
   c equalized status, input value
   d state a
   e state b
   f state c
   g state d
Fig. 8:
   a master CPU
   b slave CPU
   c phase 1
   d phase 2
   e phase 3
   f phase 4
Fig. 9:
   a command
   b response
   c command trigger period
   d data MA
   e data SL
   f full-duplexing communication period
   g phase 1
   h phase 2
   i phase 3
   j phase 4
Fig. 10:
   a reset signal
   b communication between CPUs
   10A master CPU
   11A communication block between CPUs
   12A host communication block
   20A slave CPU
   21A communication block
   32 input circuit
   33 AD conversion part
   34 diagnostic part
   35 peripheral circuit
   37 photo coupler
   38 host block
Fig. 11:
   a reset signal
   b communication between CPUs
   c reference voltage
   10B master CPU
   11B communication block between CPUs
   12B host communication block
   20B slave CPU
   21B communication block between CPUs 41 multiplexer
   42 multiplexer
   43 input amplifier
   44 AD converter
   45 host block
Fig. 12:
   a set value + set destination + code
   b code
   c set destination
   d set value
   51 code inspection part
   52 communication block
   53 set value processing part
   61 code inspection blosk
   62 communication block
   63 set value processing part
   81 input part
   82 output part
   83 diagnostic circuit
   84 diagnostic circuit

## Claims

1. An information processing apparatus comprising:
a first device and a second device of which each executes the same processing independently;
a status acquiring part which acquires a status of the first device; and
an event generating part which generates a common event according to the acquired status in the first device and the second device.

2. An information processing apparatus comprising:
a first device and a second device of which each executes the same processing independently;
a first status acquiring part which acquires a status of the first device;
a second status acquiring part which acquires a status of the second device;
a status comparing part which compares a first status acquired by the first status acquiring part with a second status acquired by the second status acquiring part;
a status selecting part which selects either the first status or the second status when both the compared statuses are different; and
an event generating part which generates a common event according to the selected status in the first device and the second device.

3. An information processing apparatus according to claim 2,
which comprises a status sending part which sends the first status from the first device to the second device,
wherein the status comparing part is disposed in the second device, and
the status comparing part compares a status sent from the status sending part with the second status.

4. An information processing apparatus according to claim 1,
which comprises an abnormality determining part which compares states of the first device and the second device after the event is generated and determines as abnormal when both the compared states are different.

5. An information processing apparatus according to claim 2,
which comprises an abnormality determining part which compares states of the first device and the second device after the event is generated and determines as abnormal when both the compared states are different.

6. An information processing apparatus according to claim 1,
which comprises a synchronizing part which synchronizes an operation of the first device and an operation of the second device.

7. An information processing apparatus according to claim 2,
which comprises a synchronizing part which synchronizes an operation of the first device and an operation of the second device.

8. An information processing apparatus according to claim 1,
wherein the status is a diagnostic information of a mounted circuit.

9. An information processing apparatus according to claim 2,
wherein the status is a diagnostic information of a mounted circuit.

10. An information processing apparatus according to claim 1,
which comprises a collating part which collates the data generated by the first device with the data generated by the second device,
wherein the status is a result of the collation by the collating part.

11. An information processing apparatus according to claim 2,
which comprises a collating part which collates the data generated by the first device with the data generated by the second device,
wherein the status is a result of the collation by the collating part.

12. An information processing apparatus according to claim 1,
wherein the first device and the second device are separate CPUs.

13. An information processing apparatus according to claim 2,
wherein the first device and the second device are separate CPUs.

14. An information processing method which uses a first device and a second device of which each executes the same processing independently, comprising:
a step of acquiring a status of the first device; and
a step of generating a common event according to the acquired status in the first device and the second device.

15. An information processing method which uses a first device and a second device of which each executes the same processing independently, comprising:
a first status acquiring step of acquiring a status of the first device;
a second status acquiring step of acquiring a status of the second device;
a step of comparing a first status acquired by the first status acquiring step with a second status acquired by the second status acquiring step;
a step of selecting either the first status or the second status when both the compared statuses are different; and
a step of generating a common event according to the selected status in the first device and the second device.

16. An information processing method according to claim 15,
which comprises a step of sending the first status from the first device to the second device,
wherein the sent status is compared with the second status in the step of comparing statuses.

17. An information processing method according to claim 14,
which comprise a step of comparing states of the first device and the second device after the event is generated and determining as abnormal when both the compared states are different.

18. An information processing method according to claim 15,
which comprise a step of comparing states of the first device and the second device after the event is generated and determining as abnormal when both the compared states are different.

19. An information processing method according to claim 14,
which comprises a step of synchronizing an operation of the first device and an operation of the second device.

20. An information processing method according to claim 15,
which comprises a step of synchronizing an operation of the first device and an operation of the second device.

21. An information processing method according to claim 14,
wherein the status is a diagnostic information of a mounted circuit.

22. An information processing method according to claim 15,
wherein the status is a diagnostic information of a mounted circuit.

23. An information processing method according to claim 14,
which comprises a step of collating a data generated by the first device with a data generated by the second device,
wherein the status is a result of collation by the collating step.

24. An information processing method according to claim 15,
which comprises a step of collating a data generated by the first device with a data generated by the second device,
wherein the status is a result of collation by the collating step.

25. An information processing apparatus comprising:
a first device and a second device which are mounted in a insulated state and of which each executes the same processing independently;
an acquiring part which is disposed in the first device and acquires a diagnostic information of a mounted part mounted in a non-insulated state with respect to the first device;
a sending part which sends the acquired diagnostic information from the first device to the second device; and
a process executing part which is disposed in the second device and executes a processing based on the diagnostic information sent from the sending part.

26. An information processing apparatus according to claim 25,
wherein the sending means sends the acquired diagnostic information by use of an asynchronous communication.

27. An information processing apparatus according to claim 25,
wherein the first device is mounted in any one of the side of a controller and the side of a field device in a plant control system, and the second device is mounted in the other of the side of the controller and the side of the field device.

28. An information processing apparatus according to claim 25,
wherein the first device and the second device are separate CPUs.
